# EUROPÄISCHE PATENTSCHRIFT

(11) **EP 4 175 753 B1**
(45) Veröffentlichungstag und Bekanntmachung des Hinweises auf die Patenterteilung: **29.05.2024**
(21) Anmeldenummer: 22769267.0
(22) Anmeldetag: 29.08.2022
(51) Int. Cl.: B02C 4/32, B02C 4/02, B02C 19/00, B02C 23/08

(54) **VORRICHTUNG UND VERFAHREN ZUR AUFBEREITUNG VON ALTBETON**
APPARATUS AND METOD FOR TREATMENT OF OLD CONCRETE
DISPOSITIF ET PROCÉDÉ POUR LE TRAITEMENT DE BÉTON VIEUX

(30) Priorität: 03.09.2021 DE 102021209729; 03.09.2021 BE 202105691
(43) Veröffentlichungstag der Anmeldung: 10.05.2023
(73) Patentinhaber: thyssenkrupp Polysius GmbH, 59269 Beckum (DE)
(72) Erfinder: RATZLAFF, Sergej, 59555 Lippstadt (DE); KACHE, Guido, 59269 Beckum (DE); MAIER, Oliver, 48167 Münster (DE); PATO, Nicolas, 69239 Neckarsteinach (DE)
(74) Vertreter: thyssenkrupp Intellectual Property GmbH
(86) Internationale Anmeldenummer: PCT/EP2022/073876
(87) Internationale Veröffentlichungsnummer: WO 2023/031076

(56) Entgegenhaltungen:
- EP-A2- 0 487 356
- WO-A1-2015/051925
- WO-A1-2016/071197
- CN-U- 207 793 088
- DE-T2- 69 213 190

## Beschreibung

Die Erfindung betrifft eine Vorrichtung und ein Verfahren zur Aufbereitung von Altbeton.

Bei der Herstellung von Beton wird üblicherweise Bausand oder Kies als Zuschlagstoff verwendet. Der weltweite Bedarf an Bausand ist bereits sehr groß und steigt stetig an. Schätzungen gehen davon aus, dass zwischen 30 und 50 Milliarden Tonnen Sand und Kies weltweit pro Jahr verbraucht werden. Eine Alternative zu Bausand stellt recycelter Beton dar, der zerkleinert wieder dem Betonherstellungsprozess zugeführt wird. Derzeit beruht die Recyclingstrategie von Altbeton darauf, eine minderwertige Gesteinskörnung herzustellen, die beispielsweise zur Verfüllung im Straßenbau eingesetzt wird. Aus der EP 3 613 713 A1 ist ein Verfahren zur Herstellung eines Zuschlagstoffes für Beton aus Altbeton bekannt. Der Altbeton wird dabei gebrochen und anschließend in unterschiedliche Korngrößen klassiert. Auch die WO 2016/071197 A1 beschreibt ein Verfahren zur Herstellung eines Zuschlagsstoffes für Beton aus Altbeton mit Fraktionen unterschiedlicher Korngrößen.

Solche rezyklierte Zuschlagstoff bzw. Gesteinskörnungen, besitzen im Vergleich zu natürlicher Gesteinskörnung eine höhere Porosität, dementsprechend auch eine höhere Wasseraufnahme und eine geringere Rohdichte. Die Rohdichte ist dabei stark vom Feuchtezustand abhängig, woraus sich für die Betonherstellung eine veränderte Problematik im Vergleich zur natürlichen Gesteinskörnung ergibt. Der tatsächliche wirksame Wassergehalt, der die entscheidende Stellgröße für eine weitere Qualitätsoptimierung der Betone ist, konnte bislang nicht zielsicher eingestellt werden und stellt eine große Unbekannte dar. Daher werden rezyklierte Gesteinskörnungen teilweise als minderwertig gegenüber natürlichen Gesteinskörnungen bewertet.

Minderwertige Zuschlagstoffe haben einen erhöhten Wasseranspruch in der Betonanwendung zur Folge, wobei das Aushärteverhalten des so hergestellten Betons schlechter als mit natürlichen Gesteinskörnungen ist. Die Korngrößenverteilung, Porosität und die Kornform des Betonzugschlagstoffes haben einen erheblichen Einfluss auf die Verarbeitungseigenschaften und Festigkeit des Betons.

Davon ausgehend ist es Aufgabe der vorliegenden Erfindung, eine Vorrichtung und ein Verfahren zur Aufbereitung von Altbeton anzugeben, wobei die Qualität der aus dem aufbereiten Altbeton zurückgewonnenen Gesteinskörnungen verbessert wird.

Diese Aufgabe wird erfindungsgemäß durch ein Verfahren mit den Merkmalen des unabhängigen Verfahrensanspruchs 1 und durch eine Vorrichtung mit den Merkmalen des unabhängigen Vorrichtungsanspruchs 11 gelöst. Vorteilhafte Weiterbildungen ergeben sich aus den abhängigen Ansprüchen.

Ein Verfahren zur Aufbereitung von Altbeton, wobei das Altbeton Zementstein und einen Zuschlagstoff, insbesondere Sand und/ oder Kies, umfasst nach einem ersten Aspekt: Mahlen des Altbetons in einer Mahleinrichtung, Klassieren des gemahlenen Altbetons in einer Klassierungseinrichtung in zumindest zwei Produkte unterschiedlicher Kornfraktionen, wobei das Mahlen mit einem Mahldruck von weniger als 50 MPa erfolgt.

Optional wird das Altbeton vor dem Mahlen in einer Zerkleinerungseinrichtung vorzerkleinert. Bei der Zerkleinerungseinrichtung handelt es sich beispielsweise um einen Brecher oder eine Mühle. Die Korngröße des optional vorzerkleinerten Altbetons, das in die Mahleinrichtung aufgegeben wird, beträgt beispielsweise 50 mm bis 100 mm.

Unter Altbeton ist bereits erhärteter, fester Beton zu verstehen, der beispielsweise aus dem Abriss von Bauwerken erhalten wird. Altbeton weist insbesondere einen Zementsteinanteil, mit Wasser abgebundener Zement und einen Anteil an vorzugsweise Natursand oder Kies auf, der bei der Herstellung des Betons als Zuschlagstoff verwendet wurde.

Bei der Mahleinrichtung handelt es sich beispielsweise um eine Walzenmühle. Eine Walzenmühle umfasst vorzugsweise eine erste Mahlwalze und eine zweite Mahlwalze, die gegenüberliegend angeordnet und gegenläufig antreibbar sind, wobei zwischen den Mahlwalzen ein Mahlspalt ausgebildet ist. Bei der Walzenmühle handelt es sich vorzugsweise um eine Hochdruckwalzenpresse, wobei das Mahlgut größtenteils oder vollständig durch Druck zerkleinert wird. Es ist ebenfalls denkbar, dass darüber hinaus aus dem Druck eine Scherspannung im Mahlspalt erzeugt werden kann. Eine Zerkleinerung des Materials durch Prall- und Schlagbeanspruchung erfolgt nicht oder nur in einem vernachlässigbaren Maße. Der Mahldruck ist vorzugsweise in der Mahleinrichtung einstellbar. Unter dem Mahldruck ist der in dem Mahlspalt auf das zu zerkleinernde Mahlgut wirkende Druck zu verstehen. Beispielsweise wird dieser mittels einer hydraulischen Anpresseinrichtung an einer der Mahlwalzen erzeugt und eingestellt.

Ein Mahldruck von weniger als 50 MPa sorgt dafür eine Zerkleinerung des Altbeton, bei welcher lediglich der Zementstein der die Körner des Zuschlagstoffes verbindet, nicht aber die Körner des Zuschlagstoffes zerkleinert werden. Eine Scherspannung erzeugt Reibung an der Kornoberfläche und einen gezielten Abrieb des Zementsteins von der Gesteinskörnung. Somit bleibt der Sand und der Kies des Altbetons erhalten und die Kornform wird optimaler Weise nicht zerstört.

Gemäß einer ersten Ausführungsform erfolgt das Mahlen mit einem Mahldruck, der geringer als die Bruchgrenze des Zuschlagstoffes des Altbetons ist. Somit ist der auf das Altbeton wirkende Druck geringer als die Bruchgrenze des Zuschlagstoffes, wie Sand und Kies. Dadurch wird sichergestellt, dass mittels der Mahleinrichtung lediglich der Zementstein zerkleinert wird, der vorzugsweise eine geringere Bruchgrenze als der Zuschlagstoff aufweist. Unter der Bruchgrenze des Zuschlagstoffes ist insbesondere die mittlere Bruchfestigkeit des Zuschlagstoffes, wie Sand und/ oder Kies, zu verstehen, bei welchen der Zuschlagstoff, insbesondere durch Druck, zerkleinert wird. Unter der Druckfestigkeit des Altbetons ist vorzugsweise die mittlere Druckfestigkeit des Altbetons zu verstehen, bei welcher der Altbeton, insbesondere durch Druck, zerkleinert wird.

Beispielsweise ist die Mahleinrichtung mit einer Steuerungs-/Regelungseinrichtung verbunden, die derart ausgebildet ist, dass sie den Mahldruck der Mahleinrichtung auf einen Wert von weniger als 50 MPa steuert/ regelt. Beispielsweise wird das Altbeton vor der Aufgabe in die Mahleinrichtung hinsichtlich der Eigenschaften des Zuschlagstoffes aus Sand und/ oder Kies, analysiert. Vorzugsweise wird die Bruchgrenze des Zuschlagstoffes des Altbetons und/ oder die Druckfestigkeit des Altbetons ermittelt und an die Steuerungs-/Regelungseinrichtung übermittelt. Die Steuerungs-Regelungseinrichtung ist vorzugsweise derart ausgebildet, dass die den Mahldruck der Mahleinrichtung in Abhängigkeit der Bruchfestigkeit des Zuschlagstoffes und/ oder der Druckfestigkeit des Altbetons, steuert/ regelt.

Vorzugsweise wird der Mahldruck der Mahleinrichtung derart eingestellt, dass er geringer ist als die Bruchfestigkeit des Zuschlagstoffes und insbesondere höher als die Druckfestigkeit des Altbeton. Dadurch wird erreicht, dass der Zementstein des Altbeton, der die Körner des Zuschlagstoffes miteinander verbindet, gebrochen und der Zuschlagstoff gleichzeitig nicht beschädigt wird. Vorzugsweise wird der Zuschlagstoff von dem Zementstein getrennt.

Der Mahldruck wird vorzugsweise derart eingestellt, dass er etwa 2 bis 10 MPa, insbesondere 5 MPa unterhalb der Bruchgrenze des Zuschlagstoffes ist.

Unter einer Steuerungs-/Regelungseinrichtung ist eine Einrichtung zu verstehen, die zur Steuerung und/ oder zur Regelung ausgebildet ist.

Die Mahleinrichtung umfasst eine Walzenmühle mit zwei Mahlwalzen, die zwischen einander einen Mahlspalt ausbilden, wobei das Mahlen des Altbetons bei relativ zueinander unterschiedlichen Rotationsgeschwindigkeiten der Mahlwalzen erfolgt. Dadurch wird ein Schergradient hervorgerufen, um Reibung an der Oberfläche des Zuschlagstoffs zu erzielen und so einen gezielten Abrieb des Zementsteins von den Körnern des Zuschlagstoffs zu bewirken.

Gemäß einer weiteren Ausführungsform wird die Korngrößenverteilung des gemahlenen Altbeton ermittelt und der Mahldruck der Mahleinrichtung in Abhängigkeit der ermittelten Korngrößenverteilung gesteuert/ geregelt. Die Korngrößenverteilung des Altbetons wird beispielsweise mittels einer Sichtprüfung, beispielsweise in situ oder online, ermittelt, wobei beispielsweise die Mengen an Altbeton auf unterschiedlichen Siebgrößen überprüft wird.

Zwischen der Mahleinrichtung und der Klassierungseinrichtung ist vorzugsweise eine Messeinrichtung zur Ermittlung der Korngrößenverteilung des gemahlenen Altbeton angeordnet. Die Messeinrichtung ist vorzugsweise mit der Steuerungs-/Regelungseinrichtung verbunden, wobei der Mahldruck in Abhängigkeit der ermittelten Korngrößenverteilung gesteuert/ geregelt wird.

Beispielsweise wird die ermittelte Korngrößenverteilung mit einem vorabbestimmten Grenzwert oder Grenzbereich verglichen und bei einer Abweichung von dem Grenzwert oder Grenzbereich wird der Mahldruck erhöht oder verringert. Vorzugsweise wird der Mahldruck erhöht, wenn die ermittelte Korngrößenverteilung den vorabbestimmten Grenzwert oder Grenzbereich überschreitet. Vorzugsweise wird der Mahldruck verringert, wenn die ermittelte Korngrößenverteilung den vorabbestimmten Grenzwert oder Grenzbereich unterschreitet.

Gemäß einer weiteren Ausführungsform wird die Korngrößenverteilung mittels einer optischen Messeinrichtung ermittelt. Bei einer optischen Messeinrichtung handelt es sich beispielsweise um eine Kamera, die derart angeordnet ist, dass sie die Korngrößen des gemahlenen Altbetons erfassen und beispielsweise an eine Bildauswertung übermitteln kann. Beispielsweise ist die Messeinrichtung oberhalb eines Siebes angeordnet und erfasst die auf dem Sieb liegenden Korngrößen. Die von der Kamera, insbesondere der Bildauswertung, ermittelte Korngröße wird an die Steuerungs-/Regelungseinrichtung übermittelt.

Der gemahlene Altbeton wird in der Klassierungseinrichtung in zumindest zwei Produkte unterschiedlicher Kornfraktionen klassiert, wobei das erste Produkt eine Kornfraktion mit einer Körnung von 2 mm bis 31,5 mm, insbesondere 2 mm bis 16 mm, vorzugsweise 4mm bis 16mm, und das zweite Produkt eine Kornfraktion mit einer Körnung von 0,15 mm bis 2 mm, insbesondere 0,15mm bis 4mm, aufweist. Die Produkte werden vorzugsweise in einem anschließenden Prozess zur Herstellung von Beton als Zuschlagstoff verwendet. Hierfür können die Produkte einer weiteren Klassierungseinrichtung zugeführt werden, um beispielsweise Kornfraktionen die Anforderungen gemäß DIN EN 12620 erfüllen, zu erzeugen.

Beispielsweise wird der gemahlene Altbeton in der Klassierungseinrichtung des Weiteren in ein drittes Produkt eine Kornfraktion mit einer Korngröße von kleiner als 0,15 mm klassiert. Das dritte Produkt, in dem insbesondere der Zementstein angereichert ist, wird vorzugsweise anschließend in einem Prozess zur Herstellung von Zement verwendet, insbesondere zu Zementklinker gebrannt, wobei der Zementstein reaktiviert wird.

Gemäß einer weiteren Ausführungsform umfasst das Klassieren des gemahlenen Altbetons das Sieben des gemahlenen Altbetons in einer Siebeinrichtung und/ oder das Sichten zumindest eines Teils des gemahlenen oder gesiebten Altbetons in einer Sichteinrichtung.

Die Klassierungseinrichtung umfasst vorzugsweis eine Siebeinrichtung und/ oder eine Sichteinrichtung. Vorzugsweise ist die Sichteinrichtung der Siebeinrichtung nachgeschaltet. Dies ermöglicht eine Klassierung des gemahlenen Altbetons in mehreren Schritten, sodass zuverlässig unterschiedliche Kornfraktionen erzeugt werden.

Gemäß einer weiteren Ausführungsform weist die Siebeinrichtung zumindest zwei Siebe auf, wobei der gemahlene Altbeton in zumindest drei unterschiedliche Kornfraktionen klassiert wird. Die Siebeinrichtung umfasst vorzugsweise zumindest zwei, vorzugsweise drei, vier oder mehr Siebe. Insbesondere sind die Siebe in Reihe hintereinander angeordnet und weisen unterschiedliche Durchlassgrößen auf. Die Siebe einer Siebeinrichtung sind dazu vorzugsweise übereinander angeordnet, sodass das Material schwerkraftbedingt durch die Siebe strömt. Vorzugsweise wird das gemahlene Altbeton in der Siebeinrichtung in eine erste Kornfraktion mit einer Korngröße von 2 mm bis 16 mm, insbesondere 4 mm bis 16 mm, in eine zweite Kornfraktion mit einer Korngröße größer als 16 mm und in eine dritte Kornfraktion mit einer Korngröße von kleiner als 2 mm, insbesondere kleiner als 4mm, gesiebt. Die zweite Kornfraktion wird vorzugsweise der Mahleinrichtung zugeführt und erneut gemahlen. Insbesondere wird die Menge an Material der zweiten Kornfraktion mittels einer Messeinrichtung ermittelt und an die Steuerungs-/ Regelungseinrichtung übermittelt.

Vorzugsweise wird der Mahldruck der Mahleinrichtung in Abhängigkeit der ermittelten Menge der zweiten Kornfraktion gesteuert/ geregelt. Beispielsweise wird die ermittelte Menge mit einem vorab bestimmten Grenzwert oder Grenzbereich verglichen und bei einer Abweichung der Menge von dem Grenzwert oder Grenzbereich wird der Mahldruck erhöht oder verringert. Insbesondere wird der Mahldruck erhöht, wenn die ermittelte Menge den Grenzwert oder Grenzbereich übersteigt. Insbesondere wird der Mahldruck verringert, wenn die ermittelte Menge den Grenzwert oder Grenzbereich unterschreitet.

Vorzugsweise wird das in der Siebeinrichtung gesiebte Material der dritten Kornfraktion mit einer Korngröße von kleiner als 2 mm, insbesondere kleiner als 4mm, der Sichteinrichtung zugeführt.

Gemäß einer weiteren Ausführungsform wird der gesiebte Altbeton in der Sichteinrichtung in eine erste Kornfraktion mit einer Körnung von 0,15 mm bis 2 mm, insbesondere 0,15 mm bis 4 mm, und in eine zweite Kornfraktion mit einer Körnung kleiner als 0,15 mm klassiert. Die Sichteinrichtung umfasst beispielsweise einen dynamischen und/oder einen statischen Sichter. Ein dynamischer Sichter weist beispielsweise einen rotierbaren Stabkorb auf, wobei die eine bestimmte Korngröße übersteigenden Körner an dem äußeren Umfang des rotierenden Stabkorb abgewiesen werden und den dynamischen Sichter durch einen Grobgutauslass verlassen, wobei die in den Stabkorb eintretenden Körner durch einen Feingutauslass den dynamischen Sichter verlassen.

In einem statischen Sichter erfolgt vorzugsweise eine grobe Materialsichtung über Prall- und Leitvorrichtungen. Parameter, die das Trennverhalten des statischen Sichters beeinflussen, umfassen beispielsweise die Ausgestaltung der Strömungselemente, insbesondere der Anstellwinkel der Leitschaufeln der Strömungselemente und die Strömungsgeschwindigkeit, sowie die Anzahl der Strömungselemente in dem statischen Sichter.

Der gesiebte Altbeton wird gemäß einer weiteren Ausführungsform in der Sichteinrichtung in eine erste Kornfraktion mit einer Körnung von 0,15 mm bis 2 mm, insbesondere 0,15 mm bis 4 mm und in eine zweite Kornfraktion mit einer Körnung kleiner als 0,15 mm klassiert.

Gemäß einer weiteren Ausführungsform wird das klassierte, insbesondere gesiebte und/ oder gesichtete Altbeton einer Kornfraktion mit einer Korngröße von 0,15 mm bis 16mm, insbesondere 0,15 mm, bis 4 mm oder 2 mm bis 16 mm oder 4 mm bis 16 mm einer Setzmaschine zugeführt und in Abhängigkeit der Dichte der Körner des Altbetons getrennt. Vorzugsweise wird der Setzmaschine Altbeton einer Kornfraktion mit einer Korngröße von 2 mm bis 4mm, 4 mm bis 8 mm oder 8 mm bis 16 mm zugeführt.

Die Setzmaschine ist vorzugsweise derart ausgebildet, dass sie das Material, insbesondere das gemahlene Altbeton, in Abhängigkeit der Feststoffdichte der Körner trennt. Vorzugsweise werden Körner ab einem bestimmten vorabbestimmten Dichtegrenzwert von den Körnern, die eine Dichte unterhalb des Dichtegrenzwertes aufweisen, getrennt. Der Dichtegrenzwert ist vorzugsweise in der Setzmaschine einstellbar. Beispielsweise beträgt der Dichtegrenzwert etwa 2000 kg/m³ bis 2800 kg/m³, insbesondere etwa 2500 kg/m³.

Die Vorrichtung zur Aufbereitung von Altbeton weist vorzugsweise eine erste Setzmaschine auf, die der Siebeinrichtung nachgeschaltet ist. Insbesondere ist die erste Setzmaschine derart mit der Siebeinrichtung verbunden, dass ihr der gesiebte Altbeton der Kornfraktion mit einer Korngröße von 2mm bis 16mm, insbesondere 4 mm bis 16 mm zugeführt wird. Das Altbeton mit einer Dichte oberhalb des vorabbestimmten Dichtegrenzwertes wird vorzugsweise dem ersten Produkt zugeführt, wobei vorzugsweise das Altbeton mit einer Dichte unterhalb des vorabbestimmten Dichtegrenzwertes der Mahleinrichtung zur erneuten Zerkleinerung zugeführt wird.

Die Vorrichtung zur Aufbereitung von Altbeton weist des Weiteren beispielsweise eine zweite Setzmaschine auf, die der Sichteinrichtung nachgeschaltet ist. Insbesondere ist die zweite Setzmaschine derart mit der Sichteinrichtung verbunden, dass ihr das gesichtete Altbeton der ersten Kornfraktion mit einer Körnung von 0,15 mm bis 2 mm, insbesondere 0,15 mm bis 4 mm, zugeführt wird. Der Altbeton mit einer Dichte oberhalb eines vorabbestimmten Dichtegrenzwertes wird vorzugsweise dem zweiten Produkt zugeführt, wobei das Altbeton mit einer Dichte unterhalb des vorabbestimmten Dichtegrenzwertes der Mahleinrichtung zur erneuten Zerkleinerung zugeführt wird. Die Abluft der Setzmaschinen wird vorzugsweise einer Entstaubungseinrichtung zugeführt und entstaubt.

Eine Trennung der Körner des Altbetons nach der Feststoffdichte ermöglicht eine Erhöhung der Qualität des Produkts. Der Zementstein weist eine geringere Dichte als der Zuschlagstoff, wie Sand und Kies, auf, sodass Körner, die einen großen Anteil an Zementstein enthalten zu der Mahleinrichtung zur erneuten Zerkleinerung zurückgeführt werden und die Körner mit einem hohen Anteil and Sand und Kies das Produkt ausbilden. Insbesondere werden das erste Produkt und das zweite Produkt in einem Betonherstellungsprozess als Zuschlagstoff verwendet.

Die Abluft der Siebeinrichtung, der Mahleinrichtung, der Setzmaschine und/ oder der Sichteinrichtung werden gemäß einer weiteren Ausführungsform einer Entstaubungseinrichtung zugeführt. Der in der Entstaubungseinrichtung von der Luft abgetrennte Staubt wird vorzugsweise dem Produkt mit einer Korngröße von kleiner als 0,15 mm zugeführt. Bei diesem Produkt handelt es sich vorzugsweise hauptsächlich um gemahlenen Zementstein. Vorzugsweise wird das Produkt einem Zementherstellungsprozess zugeführt.

Die Erfindung betrifft auch eine Vorrichtung zur Aufbereitung von Altbeton aufweisend optional eine Zerkleinerungseinrichtung zur Vorzerkleinerung des Altbetons,
eine Mahleinrichtung zum Mahlen des Altbetons,
eine Klassierungseinrichtung zum Klassieren des gemahlenen Altbetons in zumindest zwei Produkte unterschiedlicher Kornfraktionen, wobei
die Mahleinrichtung derart ausgebildet und eingerichtet ist, dass das Mahlen des Altbetons mit einem Mahldruck von weniger als 50 MPa erfolgt.

Die vorangehend beschriebenen Ausführungen und Vorteile des Verfahrens zur Aufbereitung von Altbeton trifft in vorrichtungsgemäßer Entsprechung ebenfalls auf die Vorrichtung zur Aufbereitung von Altbeton zu.

Die Mahleinrichtung umfasst eine Walzenmühle mit zwei Mahlwalzen, die zwischen einander einen Mahlspalt ausbilden, wobei das Mahlen des Altbetons bei relativ zueinander unterschiedlichen Rotationsgeschwindigkeiten der Mahlwalzen erfolgt. Vorzugsweise ist die Mahleinrichtung derart ausgebildet und eingerichtet, dass die Mahlwalzen mit voneinander verschiedenen Rotationsgeschwindigkeiten rotierbar sind. Insbesondere ist eine Steuerungseinrichtung vorgesehen, die mit der Mahleinrichtung verbunden ist und dazu ausgebildet und eingerichtet ist, die Rotationsgeschwindigkeit der Mahlwalzen zu steuern, sodass diese voneinander verschiedene Rotationsgeschwindigkeiten aufweisen.

Gemäß einer Ausführungsform weist die Vorrichtung eine Messeinrichtung zur Ermittlung der Korngrößenverteilung des gemahlenen Altbetons und eine Steuerung/ Regelungseinrichtung auf, die mit der Mahleinrichtung und der Messeinrichtung verbunden und derart ausgebildet ist, dass sie den Mahldruck der Mahleinrichtung in Abhängigkeit der ermittelten Korngrößenverteilung steuert/ regelt.

Die Klassierungseinrichtung umfasst gemäß einer weiteren Ausführungsform eine Siebeinrichtung zum Sieben des gemahlenen Altbetons in zumindest zwei Kornfraktionen und eine Sichteinrichtung zum Sichten zumindest eines Teils des in der Siebeinrichtung gesiebten Altbetons.

Die Siebeinrichtung weist gemäß einer weiteren Ausführungsform zumindest zwei Siebe auf und ist derart ausgebildet, dass sie das gemahlene Altbeton in zumindest drei unterschiedliche Kornfraktionen klassiert. Die Siebeinrichtung ist gemäß einer weiteren Ausführungsform mit dem Sichter derart verbunden, dass das Altbeton einer Körnung, die kleiner als 2 mm, insbesondere kleiner als 4mm, ist, der Sichteinrichtung zugeführt wird. Vorzugsweise wird der Sichteinrichtung ausschließlich Altbeton einer Körnung, die kleiner als 2 mm, insbesondere kleiner als 4 mm, ist, von der Siebeinrichtung zugeleitet.

Die Siebeinrichtung ist insbesondere mit der Sichteinrichtung derart verbunden, dass das Altbeton einer Körnung, die kleiner als 2 mm, vorzugsweise kleiner als 4mm, ist, der Sichteinrichtung zugeführt wird. Die Sichteinrichtung ist vorzugsweise derart ausgebildet, dass sie das gesiebte Altbeton in eine erste Kornfraktion mit einer Körnung von 0,15 mm bis 2 mm, in insbesondere 0,15 mm bis 4 mm, und in eine zweite Kornfraktion mit einer Körnung kleiner als 0,15 mm klassiert.

Die Vorrichtung weist gemäß einer weiteren Ausführungsform zumindest eine Setzmaschine auf, die derart mit der Siebeinrichtung und/ oder der Sichteinrichtung verbunden ist, sodass das Altbeton einer Körnung von 0,15 mm bis 2 mm bis 4mm oder von 2 mm bis 16 mm der Setzmaschine zugeführt wird.

Die Vorrichtung zur Aufbereitung von Altbeton weist insbesondere eine Entstaubungseinrichtung auf, die mit der Sichteinrichtung, der Mahleinrichtung, der Setzmaschine und/ oder der Siebeinrichtung verbunden ist, sodass die Abluft der Siebeinrichtung, der Mahleinrichtung, der Setzmaschine und/ oder der Sichteinrichtung der Entstaubungseinrichtung zugeführt wird.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt ein Flussdiagram eines Verfahrens und einer Vorrichtung zur Aufbereitung von Altbeton gemäß einem Ausführungsbeispiel.
- Fig. 2: zeigt ein Flussdiagram eines Verfahrens und einer Vorrichtung zur Aufbereitung von Altbeton gemäß einem weiteren Ausführungsbeispiel.

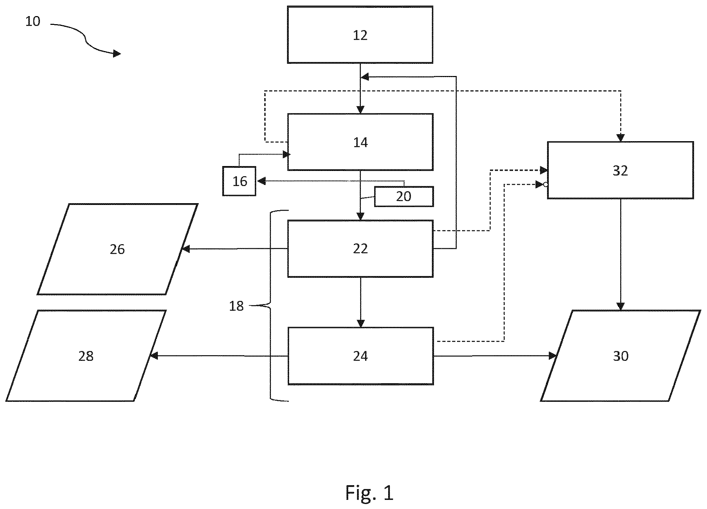

Fig. 1 zeigt eine schematische Darstellung einer Vorrichtung 10 zur Aufbereitung von Altbeton. Fig. 1 kann auch als Flussdiagramm eines Verfahrens zur Aufbereitung von Altbeton gelesen werden. Bei dem Altbeton handelt es sich beispielsweise um Abbruchbeton aus Bauwerken, wobei der Altbeton vorzugsweise einen Zuschlagstoff, wie beispielsweise Sand und/oder Kies, und Zementstein umfasst. Unter Zementstein ist mit Wasser ausgehärteter Zement zu verstehen, der vorzugsweise die Körner des Zuschlagstoffes miteinander verbindet. Unter der Aufbereitung von Altbeton ist eine Bearbeitung des Altbetons zu verstehen, sodass dieser zumindest teilweise als Zuschlagstoff zur Herstellung von Beton verwendet werden kann.

Die Vorrichtung 10 zur Aufbereitung von Altbeton gemäß dem Ausführungsbeispiel der Fig. 1 weist optional eine Zerkleinerungseinrichtung 12 zur Vorzerkleinerung des Altbetons auf, beispielsweise ein Brecher oder eine Mühle. Die Zerkleinerungseinrichtung 12 ist vorzugsweise derart ausgebildet und eingerichtet, dass sie den Altbeton auf eine Korngröße von etwa 50 mm bis 100 mm zerkleinert. Es ist ebenfalls möglich, dass den Altbeton bereits bei Abriss eines Bauwerkes auf die voran genannte Korngröße zerkleinert wurde, sodass die Zerkleinerungseinrichtung 12 lediglich optional in der Vorrichtung 10 umfasst ist.

An die Zerkleinerungseinrichtung 12 schließt sich in Materialflussrichtung des Altbetons eine Mahleinrichtung 14 an, in welcher der optional vorzerkleinerte Altbeton gemahlen wird. Bei der Mahleinrichtung 14 handelt es sich vorzugweise um eine Walzenmühle. Die Mahleinrichtung umfasst vorzugsweise zwei parallele Mahlwalzen, die gegenläufig rotierbar sind und zwischen sich einen Mahlspalt ausbilden. Der Altbeton wird vorzugsweise in dem Mahlspalt mittels des Mahldrucks zerkleinert. Der Mahldruck, den die Mahlwalzen in dem Mahlspalt auf den Altbeton ausüben, ist vorzugsweise in der Mahleinrichtung 14 einstellbar. Der Altbeton wird in der Mahleinrichtung 14 vorzugsweise mit einem Mahldruck von weniger als 50 MPa gemahlen. Vorzugsweise ist die Mahleinrichtung mit einer Steuerungs-/Regelungseinrichtung 16 verbunden, die derart ausgebildet ist, dass sie den Mahldruck der Mahleinrichtung auf einen Wert von weniger als 50 MPa steuert/ regelt. Beispielsweise wird der Altbeton vor der Aufgabe in die Mahleinrichtung hinsichtlich der Eigenschaften des Zuschlagstoffes aus Sand und/ oder Kies, analysiert. Vorzugsweise wird die Bruchgrenze des Zuschlagstoffes des Altbetons und/ oder die Druckfestigkeit des Altbetons ermittelt und an die Steuerungs-/Regelungseinrichtung übermittelt. Die Steuerungs-Regelungseinrichtung 16 ist vorzugsweise derart ausgebildet, dass die den Mahldruck der Mahleinrichtung 14 in Abhängigkeit der Bruchfestigkeit des Zuschlagstoffes und/ oder der Druckfestigkeit des Altbetons, steuert/ regelt.

Unter der Bruchgrenze des Zuschlagstoffes ist insbesondere die mittlere Bruchfestigkeit des Zuschlagstoffes, wie Sand und/ oder Kies, zu verstehen, bei welchen der Zuschlagstoff, insbesondere durch Druck, zerkleinert wird. Unter der Druckfestigkeit des Altbetons ist vorzugsweise die mittlere Druckfestigkeit des Altbetons zu verstehen, bei welcher der Altbeton, insbesondere durch Druck, zerkleinert wird.

Vorzugsweise wird der Mahldruck der Mahleinrichtung 14 derart eingestellt, dass er geringer ist als die Bruchfestigkeit des Zuschlagstoffes und insbesondere höher als die Druckfestigkeit des Altbeton. Dadurch wird erreicht, dass der Zementstein des Altbeton, der die Körner des Zuschlagstoffes miteinander verbindet, gebrochen und der Zuschlagstoff gleichzeitig nicht beschädigt wird. Vorzugsweise wird der Zuschlagstoff von dem Zementstein getrennt.

Der Mahldruck wird vorzugsweise derart eingestellt, dass er etwa 2 bis 10 MPa, insbesondere 5 MPa unterhalb der Bruchgrenze des Zuschlagstoffes ist.

An die Mahleinrichtung 14 schließt sich vorzugsweise in Materialflussrichtung des gemahlenen Altbetons eine Klassierungseinrichtung 18 an, in welcher der gemahlene Altbeton in zumindest zwei Produkte unterschiedlicher Korngrößenverteilung klassiert wird. Vorzugsweise wird der gemahlene Altbeton in drei Produkte unterschiedlicher Korngröße klassiert. Vorzugsweise wird der gemahlene Altbeton in ein erstes Produkt mit einer Korngröße von beispielsweise 2 mm bis 16 mm, insbesondere 4mm bis 16mm und ein zweites Produkt einer Korngröße von beispielsweise 0,15 mm bis 2 mm, insbesondere 0,15mm bis 4mm, klassiert. Insbesondere wird der Altbeton zusätzlich in ein drittes Produkt einer Korngröße von kleiner als 0,15 mm klassiert.

Zwischen der Mahleinrichtung 14 und der Klassierungseinrichtung 18 ist vorzugsweise eine Messeinrichtung 20 zur Ermittlung der Korngrößenverteilung des gemahlenen Altbeton angeordnet. Die Messeinrichtung 20 ist vorzugsweise mit der Steuerungs-/Regelungseinrichtung 16 verbunden, wobei der Mahldruck in Abhängigkeit der ermittelten Korngrößenverteilung gesteuert/ geregelt wird.

Beispielsweise wird die ermittelte Korngrößenverteilung mit einem vorabbestimmten Grenzwert oder Grenzbereich verglichen und bei einer Abweichung von dem Grenzwert oder Grenzbereich wird der Mahldruck erhöht oder verringert. Vorzugsweise wird der Mahldruck erhöht, wenn die ermittelte Korngrößenverteilung den vorabbestimmten Grenzwert oder Grenzbereich überschreitet. Vorzugsweise wird der Mahldruck verringert, wenn die ermittelte Korngrößenverteilung den vorabbestimmten Grenzwert oder Grenzbereich unterschreitet.

Die Klassierungseinrichtung 18 umfasst vorzugsweis eine Siebeinrichtung 22 und/ oder eine Sichteinrichtung 24. Beispielhaft ist in dem Ausführungsbeispiel der Fig.1 die Sichteinrichtung 24 der Siebeinrichtung 22 nachgeschaltet. Die Siebeinrichtung 22 umfasst vorzugsweise zumindest zwei, vorzugsweise drei, vier oder mehr Siebe. Insbesondere sind die Siebe in Reihe hintereinander angeordnet und weisen unterschiedliche Durchlassgrößen auf. Vorzugsweise wird der gemahlene Altbeton in der Siebeinrichtung 22 in eine erste Kornfraktion mit einer Korngröße von beispielsweise 2 mm bis 16 mm, insbesondere oder 4mm bis 16mm, in eine zweite Kornfraktion mit einer Korngröße größer als 16 mm und in eine dritte Kornfraktion mit einer Korngröße von beispielsweise kleiner als 2 mm, insbesondere kleiner als 4mm gesiebt. Die zweite Kornfraktion wird vorzugsweise der Mahleinrichtung 14 zugeführt und erneut gemahlen. Insbesondere wird die Menge an Material der zweiten Kornfraktion mittels einer Messeinrichtung ermittelt und an die Steuerungs-/ Regelungseinrichtung übermittelt. Vorzugsweise wird der Mahldruck der Mahleinrichtung in Abhängigkeit der ermittelten Menge der zweiten Kornfraktion gesteuert/ geregelt. Beispielsweise wird die ermittelte Menge mit einem vorab bestimmten Grenzwert oder Grenzbereich verglichen und bei einer Abweichung der Menge von dem Grenzwert oder Grenzbereich wird der Mahldruck erhöht oder verringert. Insbesondere wird der Mahldruck erhöht, wenn die ermittelte Menge den Grenzwert oder Grenzbereich übersteigt. Insbesondere wird der Mahldruck verringert, wenn die ermittelte Menge den Grenzwert oder Grenzbereich unterschreitet.

Vorzugsweise wird das in der Siebeinrichtung 22 gesiebte Material der dritten Kornfraktion mit einer Korngröße von beispielsweise kleiner als 2 mm, insbesondere kleiner als 4mm der Sichteinrichtung 24 zugeführt. Bei der Sichteinrichtung 24 handelt es sich beispielsweise um einen dynamischen Sichter mit einem rotierbaren Stabkorb. Ein dynamischer Sichter umfasst beispielsweise zusätzlich einen Ventilator zur Erzeugung der Sichtluft und einen Filter oder Zyklon zum Abscheiden des Feinguts aus dem Luftvolumenstrom. In der Sichteinrichtung 24 wird das gesiebte Altbeton vorzugsweise in eine erste Kornfraktion mit einer Körnung von beispielsweise 0,15 mm bis 2 mm, insbesondere oder 0,15mm bis 4mm und in eine zweite Kornfraktion mit einer Körnung kleiner als 0,15 mm klassiert.

Insbesondere bildet das in der Siebeinrichtung 22 gesiebte Material der Kornfraktion mit einer Korngröße von 2 mm bis 16 mm, insbesondere 4mm bis 16mm das erste Produkt 26 aus. Vorzugsweise bildet das in der Sichteinrichtung 24 klassierte Material der Kornfraktion mit einer Körnung von beispielsweise 0,15 mm bis 2 mm, insbesondere0,15mm bis 4mm das zweite Produkt 28 aus. Das in der Sichteinrichtung 24 klassierte Material der Kornfraktion mit einer Körnung von kleiner als 0,15 mm bildet vorzugsweise das dritte Produkt 30 aus.

Die Abluft zur Entstaubung der Sichteinrichtung 24, der Siebeinrichtung 22 und/ oder der Mahleinrichtung 14 wird vorzugsweise einer Entstaubungseinrichtung 32 zugeführt, wobei der in der Entstaubungseinrichtung 32 abgeschiedene Staub vorzugsweise dem dritten Produkt 30 zugeführt wird.

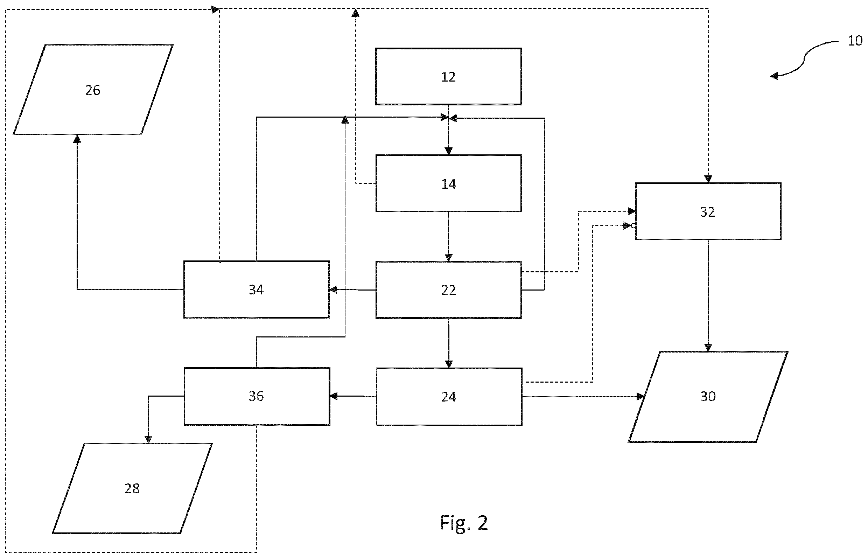

Fig. 2 zeigt eine schematische Darstellung einer Vorrichtung 10 zur Aufbereitung von Altbeton, die größtenteils der Vorrichtung der Fig. 1 entspricht und wobei gleiche Elemente mit gleichen Bezugszeichen versehen sind. Fig. 2 kann ebenfalls als Flussdiagramm eines Verfahrens zur Aufbereitung von Altbeton gelesen werden. Die Vorrichtung 10 der Fig. 2 weist ebenfalls eine Messeinrichtung 20 und eine Steuerungs-/Regelungseinrichtung 16 gemäß Fig. 1 auf, die der Übersichtlichkeit halber in Fig. 2 nicht dargestellt sind.

Im Unterschied zur Fig. 1 weist die Fig. 2 zusätzlich zwei Setzmaschinen 34, 36 auf, die beispielhaft jeweils der Siebeinrichtung 22 und der Sichteinrichtung 24 nachgeschaltet sind. Es ist ebenfalls denkbar, dass die Vorrichtung 10 lediglich eine Setzmaschine 34, 36 aufweist, die der Siebeinrichtung 22 und/ oder der Sichteinrichtung 24 nachgeschaltet ist. Die Setzmaschine 34, 36 ist vorzugsweise derart ausgebildet, dass sie das Material, insbesondere den gemahlenen Altbeton, nach ihrer Feststoffdichte sortiert. Vorzugsweise werden Körner ab einem bestimmten vorabbestimmten Dichtegrenzwert von den Körnern, die eine Dichte unterhalb des Dichtegrenzwertes aufweisen, getrennt.

Der Dichtegrenzwert ist vorzugsweise einstellbar. Beispielsweise beträgt der Dichtegrenzwert etwa 2000 kg/m³ bis 2800 kg/m³, insbesondere etwa 2500 kg/m³.

Die Vorrichtung 10 weist vorzugsweise eine erste Setzmaschine 34 auf, die der Siebeinrichtung 22 nachgeschaltet ist. Insbesondere ist die erste Setzmaschine 34 derart mit der Siebeinrichtung 22 verbunden, dass ihr das gesiebte Altbeton der ersten Kornfraktion mit einer Korngröße von beispielsweise 2 mm bis 16 mm, insbesondere4mm bis 16mm zugeführt wird. Das Altbeton mit einer Dichte oberhalb des vorabbestimmten Dichtegrenzwertes wird vorzugsweise dem ersten Produkt 26 zugeführt, wobei das Altbeton mit einer Dichte unterhalb des vorabbestimmten Dichtegrenzwertes der Mahleinrichtung 14 zur erneuten Zerkleinerung zugeführt wird.

Die Vorrichtung 10 weist des Weiteren beispielsweise eine zweite Setzmaschine 36 auf, die der Sichteinrichtung 24 nachgeschaltet ist. Insbesondere ist die zweite Setzmaschine 36 derart mit der Sichteinrichtung 24 verbunden, dass ihr das gesichtete Altbeton der ersten Kornfraktion mit einer Körnung von beispielsweise 0,15 mm bis 2 mm insbesondere 0,15mm bis 4mm zugeführt wird. Der Altbeton mit einer Dichte oberhalb eines vorabbestimmten Dichtegrenzwertes wird vorzugsweise dem zweiten Produkt 28 zugeführt, wobei der Altbeton mit einer Dichte unterhalb des vorabbestimmten Dichtegrenzwertes der Mahleinrichtung 14 zur erneuten Zerkleinerung zugeführt wird. Die Abluft der Setzmaschinen 34, 36 wird vorzugsweise der Entstaubungseinrichtung 32 zugeführt und entstaubt.

Eine Klassierung des Altbetons nach der Feststoffdichte ermöglicht die Herstellung eines qualitativ hochwertigeren Produkts 26, 28. Der Zementstein weist eine geringere Dichte als der Zuschlagstoff, wie Sand und Kies auf, sodass Körner, die einen großen Anteil an Zementstein enthalten zu der Mahleinrichtung 14 zur erneuten Zerkleinerung zurückgeführt werden und die Körner mit einem hohen Anteil and Sand und Kies das Produkt 26, 28 ausbilden. Insbesondere werden das erste Produkt 26 und das zweite Produkt 28 in einem Betonherstellungsprozess als Zuschlagstoff verwendet.

### Bezugszeichenliste

- 10: Vorrichtung zur Aufbereitung von Altbeton
- 12: Zerkleinerungseinrichtung
- 14: Mahleinrichtung
- 16: Steuerungs-/Regelungseinrichtung
- 18: Klassierungseinrichtung
- 20: Messeinrichtung
- 22: Siebeinrichtung
- 24: Sichteinrichtung
- 26: erstes Produkt
- 28: zweites Produkt
- 30: drittes Produkt
- 32: Entstaubungseinrichtung
- 34: Setzmaschine
- 36: Setzmaschine

## Patentansprüche

1. Verfahren zur Aufbereitung von Altbeton, wobei der Altbeton Zementstein und einen Zuschlagstoff, insbesondere Sand und/ oder Kies, umfasst, wobei das Verfahren die Schritte aufweist:
Mahlen des Altbetons in einer Mahleinrichtung (14),
Klassieren des gemahlenen Altbetons in einer Klassierungseinrichtung (18) in zumindest zwei Produkte (26, 28, 30) unterschiedlicher Kornfraktionen
das Mahlen mit einem Mahldruck von weniger als 50 MPa erfolgt und wobei die Mahleinrichtung (14) eine Walzenmühle mit zwei Mahlwalzen umfasst, die zwischen einander einen Mahlspalt ausbilden,
**dadurch gekennzeichnet, dass**
das Mahlen des Altbetons bei relativ zueinander unterschiedlichen Rotationsgeschwindigkeiten der Mahlwalzen erfolgt.

2. Verfahren nach Anspruch 1, wobei das Mahlen mit einem Mahldruck erfolgt, der geringer ist als die Bruchgrenze des Zuschlagstoffes des Altbetons.

3. Verfahren nach einem der vorangehenden Ansprüche, wobei die Korngrößenverteilung des gemahlenen Altbeton ermittelt und der Mahldruck der Mahleinrichtung (14) in Abhängigkeit der ermittelten Korngrößenverteilung gesteuert/ geregelt wird.

4. Verfahren nach Anspruch 3, wobei die Korngrößenverteilung mittels einer optischen Messeinrichtung (20) ermittelt wird.

5. Verfahren nach einem der vorangehenden Ansprüche, wobei der gemahlene Altbeton in der Klassierungseinrichtung (18) in zumindest zwei Produkte (26, 28) unterschiedlicher Kornfraktionen klassiert wird, wobei erste Produkt (26) eine Kornfraktion mit einer Körnung von 2mm bis 16mm, insbesondere 4mm bis 16mm, und das zweite Produkt (28) eine Kornfraktion mit einer Körnung von 0,15mm bis 2mm aufweist.

6. Verfahren nach einem der vorangehenden Ansprüche, wobei das Klassieren des gemahlenen Altbetons das Sieben des gemahlenen Altbetons in einer Siebeinrichtung (22) und/ oder das Sichten zumindest eines Teils des gemahlenen oder gesiebten Altbetons in einer Sichteinrichtung (24) umfasst.

7. Verfahren nach Anspruch 6, wobei die Siebeinrichtung (22) zumindest zwei Siebe aufweist und das gemahlene Altbeton in zumindest drei unterschiedliche Kornfraktionen klassiert wird.

8. Verfahren nach Anspruch 7, wobei der klassierte Altbeton einer Kornfraktion mit einer Korngröße von 0,15mm bis 16mm, insbesondere 0,15mm, bis 4mm oder 2mm bis 16mm oder 4mm bis 16mm einer Setzmaschine (34, 36) zugeführt wird und eine Klassierung des Altbetons in Abhängigkeit der Dichte des Altbetons erfolgt.

9. Verfahren nach einem der Ansprüche 6 bis 8, wobei das gesiebte Altbeton in der Sichteinrichtung (24) in eine erste Kornfraktion mit einer Körnung von 0,15mm bis 2mm und in eine zweite Kornfraktion mit einer Körnung kleiner als 0,15mm klassiert wird.

10. Verfahren nach einem der Ansprüche 6 bis 9, wobei die Abluft zur Entstaubung der Siebeinrichtung (22), der Mahleinrichtung (14), der Setzmaschine (34, 36) und/ oder der Sichteinrichtung (24) einer Entstaubungseinrichtung (32) zugeführt wird.

11. Vorrichtung (10) zur Aufbereitung von Altbeton, aufweisend
eine Mahleinrichtung (14) zum Mahlen des Altbetons,
eine Klassierungseinrichtung (18) zum Klassieren des gemahlenen Altbetons in zumindest zwei Produkte (26, 28, 30) unterschiedlicher Kornfraktionen,
die Mahleinrichtung (14) derart ausgebildet und eingerichtet ist, dass das Mahlen des Altbetons mit einem Mahldruck von weniger als 50MPa erfolgt und wobei die Mahleinrichtung (14) eine Walzenmühle mit zwei Mahlwalzen umfasst, die zwischen einander einen Mahlspalt ausbilden,
**dadurch gekennzeichnet, dass**
die Mahleinrichtung (14) derart ausgebildet und eingerichtet ist, dass das Mahlen des Altbetons bei relativ zueinander unterschiedlichen Rotationsgeschwindigkeiten der Mahlwalzen erfolgt.

12. Vorrichtung (10) nach Anspruch 11, wobei die Vorrichtung (10) eine Messeinrichtung (20) zur Ermittlung der Korngrößenverteilung des gemahlenen Altbetons und eine Steuerung/ Regelungseinrichtung (16) umfasst, die mit der Mahleinrichtung (14) und der Messeinrichtung (20) verbunden und derart ausgebildet ist, dass sie den Mahldruck der Mahleinrichtung (14) in Abhängigkeit der ermittelten Korngrößenverteilung steuert/ regelt.

13. Vorrichtung nach Anspruch 11 oder 12, wobei die Klassierungseinrichtung (18) eine Siebeinrichtung (22) zum Sieben des gemahlenen Altbetons in zumindest zwei Kornfraktionen und/ oder eine Sichteinrichtung (24) zum Sichten des Altbetons in zumindest zwei Kornfraktionen umfasst.

14. Vorrichtung (10) nach Anspruch 13, wobei die Siebeinrichtung (22) zumindest zwei Siebe aufweist und derart ausgebildet ist, dass sie das gemahlene Altbeton in zumindest drei unterschiedliche Kornfraktionen klassiert.

15. Vorrichtung (10) nach einem der Ansprüche 11 bis 14, wobei die Vorrichtung (10) zumindest eine Setzmaschine (34, 36) aufweist, die derart mit der Siebeinrichtung (22) und/ oder der Sichteinrichtung (24) verbunden ist, sodass das Altbeton einer Körnung von 0,15mm bis 2mm, insbesondere 0,15mm bis 4mm, oder einer Körnung von 2mm bis 16mm, insbesondere 4mm bis 16mm der Setzmaschine (34, 36) zugeführt wird.

## Claims

1. A method for processing old concrete, wherein the old concrete comprises cement rock and an aggregate, in particular sand and/or gravel, wherein the method comprises the steps:
grinding the old concrete in a grinding device (14),
classifying the ground old concrete in a classifying device (18) into at least two products (26, 28, 30) of different grain fractions, the grinding is effected at a grinding pressure of less than 50 MPa, and wherein the grinding device (14) comprises a roller mill having two grinding rollers which form, between one another, a grinding gap,
**characterized in that**
the grinding of the old concrete is effected with different rotational speeds of the grinding rollers in relation to one another.

2. The method as claimed in claim 1, wherein the grinding is effected at a grinding pressure which is lower than the fracture limit of the aggregate of the old concrete.

3. The method as claimed in either of the preceding claims, wherein the grain size distribution of the ground old concrete is ascertained and the grinding pressure of the grinding device (14) is controlled in open-loop/closed-loop fashion in dependence on the ascertained grain size distribution.

4. The method as claimed in claim 3, wherein the grain size distribution is ascertained by means of an optical measuring device (20).

5. The method as claimed in one of the preceding claims, wherein the ground old concrete is classified in the classifying device (18) into at least two products (26, 28) of different grain fractions, wherein the first product (26) has a grain fraction with a grain size of 2 mm to 16 mm, in particular 4 mm to 16 mm, and the second product (28) has a grain fraction with a grain size of 0.15 mm to 2 mm.

6. The method as claimed in one of the preceding claims, wherein the classifying of the ground old concrete comprises the screening of the ground old concrete in a screening device (22) and/or the sifting of at least a portion of the ground or screened old concrete in a sifting device (24).

7. The method as claimed in claim 6, wherein the screening device (22) comprises at least two screens and the ground old concrete is classified into at least three different grain fractions.

8. The method as claimed in claim 7, wherein the classified old concrete of a grain fraction with a grain size of 0.15 mm to 16 mm, in particular 0.15 mm to 4 mm or 2 mm to 16 mm or 4 mm to 16 mm, is fed to a jig machine (34, 36) and the old concrete is classified in dependence on the density of the old concrete.

9. The method as claimed in either of claims 7 and 8, wherein the screened old concrete is classified in the sifting device (24) into a first grain fraction with a grain size of 0.15 mm to 2 mm, and into a second grain fraction with a grain size smaller than 0.15 mm.

10. The method as claimed in one of the claims 6 to 9, wherein the exhaust air from the screening device (22), the grinding device (14), the jig machine (34, 36) and/or the sifting device (24) is fed to a dust removal device (32) for removal of dust.

11. An apparatus (10) for processing old concrete, comprising
a grinding device (14) for grinding the old concrete,
a classifying device (18) for classifying the ground old concrete into at least two products (26, 28, 30) of different grain fractions, the grinding device (14) is designed, and configured, in such a way that the grinding of the old concrete is effected at a grinding pressure of less than 50 MPa, and wherein the grinding device (14) comprises a roller mill having two grinding rollers which form, between one another, a grinding gap,
**characterized in that**
the grinding device (14) is designed, and configured, in such a way that the grinding of the old concrete is effected with different rotational speeds of the grinding rollers in relation to one another.

12. The apparatus (10) as claimed in claim 11, wherein the apparatus (10) comprises a measuring device (20) for ascertaining the grain size distribution of the ground old concrete and an open-loop/closed-loop control device (16) which is connected to the grinding device (14) and to the measuring device (20) and is designed in such a way that it controls the grinding pressure of the grinding device (14) in open-loop/closed-loop fashion in dependence on the ascertained grain size distribution.

13. The apparatus as claimed in claim 11 or 12, wherein the classifying device (18) comprises a screening device (22) for screening the ground old concrete into at least two grain fractions and/or a sifting device (24) for sifting the old concrete into at least two grain fractions.

14. The apparatus (10) as claimed in claim 13, wherein the screening device (22) comprises at least two screens and is designed in such a way that it classifies the ground old concrete into at least three different grain fractions.

15. The apparatus (10) as claimed in one of claims 11 to 14, wherein the apparatus (10) comprises at least one jig machine (34, 36) which is connected to the screening device (22) and/or to the sifting device (24) in such a way that the old concrete with a grain size of 0.15 mm to 2 mm, in particular 0.15 mm to 4 mm, or with a grain size of 2 mm to 16 mm, in particular 4 mm to 16 mm, is fed to the jig machine (34, 36).

## Revendications

1. Procédé de traitement d'un vieux béton, dans lequel le vieux béton comprend une roche cimentaire et un agrégat, en particulier du sable et/ou du gravier, dans lequel le procédé comprend les étapes suivantes :
le broyage de l'ancien béton dans un dispositif de broyage (14),
classer le vieux béton broyé dans un dispositif de classification (18) en au moins deux produits (26, 28, 30) de fractions granulaires différentes, le broyage étant effectué à une pression de broyage inférieure à 50 MPa, et dans lequel le dispositif de broyage (14) comprend un broyeur à cylindres doté de deux cylindres de broyage qui forment, l'un entre l'autre, une fente de broyage,
**caractérisé par le fait que**
le broyage du vieux béton s'effectue à différentes vitesses de rotation des rouleaux de broyage les uns par rapport aux autres.

2. Méthode selon la revendication 1, dans laquelle le broyage est effectué à une pression de broyage inférieure à la limite de rupture de l'agrégat du vieux béton.

3. Procédé selon l'une des revendications précédentes, dans lequel la distribution granulométrique du vieux béton broyé est déterminée et la pression de broyage du dispositif de broyage (14) est contrôlée en boucle ouverte/fermée en fonction de la distribution granulométrique déterminée.

4. Méthode selon la revendication 3, dans laquelle la distribution de la taille des grains est déterminée au moyen d'un dispositif de mesure optique (20).

5. Procédé selon l'une des revendications précédentes, dans lequel le vieux béton broyé est classé dans le dispositif de classification (18) en au moins deux produits (26, 28) de fractions granulométriques différentes, le premier produit (26) ayant une fraction granulométrique de 2 mm à 16 mm, en particulier de 4 mm à 16 mm, et le second produit (28) ayant une fraction granulométrique de 0,15 mm à 2 mm.

6. Procédé selon l'une des revendications précédentes, dans lequel la classification du vieux béton broyé comprend le criblage du vieux béton broyé dans un dispositif de criblage (22) et/ou le tamisage d'au moins une partie du vieux béton broyé ou criblé dans un dispositif de tamisage (24).

7. Procédé selon la revendication 6, dans lequel le dispositif de criblage (22) comprend au moins deux cribles et le vieux béton broyé est classé en au moins trois fractions granulométriques différentes.

8. Méthode selon la revendication 7, dans laquelle l'ancien béton classé d'une fraction granulométrique de 0,15 mm à 16 mm, en particulier de 0,15 mm à 4 mm ou de 2 mm à 16 mm ou de 4 mm à 16 mm, est acheminé vers une machine à gabarit (34, 36) et l'ancien béton est classé en fonction de la densité de l'ancien béton.

9. Procédé selon l'une des revendications 7 et 8, dans lequel le vieux béton criblé est classé dans le dispositif de criblage (24) en une première fraction granulométrique d'une taille comprise entre 0,15 mm et 2 mm, et en une deuxième fraction granulométrique d'une taille inférieure à 0,15 mm.

10. Procédé selon l'une des revendications 6 à 9, dans lequel l'air d'échappement du dispositif de criblage (22), du dispositif de broyage (14), de la machine à gabarit (34, 36) et/ou du dispositif de tamisage (24) est acheminé vers un dispositif de dépoussiérage (32) pour l'élimination des poussières.

11. Appareil (10) pour le traitement du béton ancien, comprenant
un dispositif de broyage (14) pour broyer le vieux béton,
un dispositif de classification (18) pour classer le vieux béton broyé en au moins deux produits (26, 28, 30) de fractions granulaires différentes, le dispositif de broyage (14) est conçu et configuré de manière à ce que le broyage du vieux béton soit effectué à une pression de broyage inférieure à 50 MPa, et dans lequel le dispositif de broyage (14) comprend un broyeur à cylindres doté de deux cylindres de broyage qui forment, l'un entre l'autre, une fente de broyage,
**caractérisé par le fait que**
le dispositif de broyage (14) est conçu et configuré de manière à ce que le broyage du vieux béton soit effectué à différentes vitesses de rotation des rouleaux de broyage l'un par rapport à l'autre.

12. L'appareil (10) selon la revendication 11, dans lequel l'appareil (10) comprend un dispositif de mesure (20) pour déterminer la distribution granulométrique du vieux béton broyé et un dispositif de commande en boucle ouverte/fermée (16) qui est connecté au dispositif de broyage (14) et au dispositif de mesure (20) et qui est conçu de manière à contrôler la pression de broyage du dispositif de broyage (14) en boucle ouverte/fermée en fonction de la distribution granulométrique déterminée.

13. L'appareil selon la revendication 11 ou 12, dans lequel le dispositif de classification (18) comprend un dispositif de criblage (22) pour cribler le vieux béton broyé en au moins deux fractions granulométriques et/ou un dispositif de tamisage (24) pour tamiser le vieux béton en au moins deux fractions granulométriques.

14. L'appareil (10) selon la revendication 13, dans lequel le dispositif de criblage (22) comprend au moins deux cribles et est conçu de manière à classer le vieux béton broyé en au moins trois fractions granulométriques différentes.

15. L'appareil (10) selon l'une des revendications 11 à 14, dans lequel l'appareil (10) comprend au moins une machine à gabarit (34, 36) qui est reliée au dispositif de criblage (22) et/ou au dispositif de tamisage (24) de manière à ce que le vieux béton d'une granulométrie de 0,15 mm à 2 mm, en particulier de 0,15 mm à 4 mm, ou d'une granulométrie de 2 mm à 16 mm, en particulier de 4 mm à 16 mm, soit acheminé vers la machine à gabarit (34, 36).
